# FASCICULE DE BREVET EUROPEEN

(11) **EP 1 100 673 B1**
(45) Date de publication et mention de la délivrance du brevet: **13.11.2002**
(21) Numéro de dépôt: 99932945.1
(22) Date de dépôt: 22.07.1999
(51) Int. Cl.: B29C 49/78, F15B 11/064

(54) **PROCEDE DE FABRICATION, PAR SOUFFLAGE, DE CORPS CREUX EN MATIERE PLASTIQUE, DISPOSITIF ET INSTALLATION POUR SA MISE EN OEUVRE**
BLASFORMVERFAHREN ZUM HERSTELLEN VON HOHLKÖRPERN AUS KUNSTSTOFFMATERIAL, VORRICHTUNG UND INSTALLATION ZUR DURCHFÜHRUNG DES VERFAHRENS
METHOD FOR MAKING, BY BLOW MOULDING, PLASTIC HOLLOW BODIES, DEVICE AND INSTALLATION THEREFOR

(30) Priorité: 29.07.1998 FR 9809811
(43) Date de publication de la demande: 23.05.2001
(73) Titulaire: SIDEL S.A., 76053 Le Havre Cédex (FR)
(72) Inventeur: EMMER, Gérard, 76053 Le Havre Cedex (FR); EVRARD, Alain, 76053 Le Havre Cedex (FR)
(74) Mandataire: Siloret, Patrick
(86) Numéro de dépôt international: FR9901800
(87) Numéro de publication internationale: WO00006365

(56) Documents cités:
- EP-A- 0 655 313
- WO-A-96/25285
- US-A- 4 488 863

## Description

L'invention a pour objet des perfectionnements aux procédés de fabrication de corps creux, notamment les récipients, tels que des bouteilles, des flacons, ou autres, obtenus par soufflage d'ébauches en matière plastique dans des moules de finition ; elle a également pour objet un dispositif et une installation pour la mise en oeuvre du procédé.

Elle trouve une application toute particulière, quoique non exclusive, pour la fabrication de corps creux de petite capacité, typiquement de l'ordre du demi-litre ou moins.

Pour fabriquer un corps creux, tel un récipient en matière plastique telle que le polyéthylène téréphtalate(pet), le polyéthylène naphtalate (pen), le polychlorure de vinyle (pvc), en monocouche ou en multicouches, il est connu de réaliser une ébauche en matière plastique, puis de placer cette ébauche, alors qu'elle est à une température de ramollissement, dans un moule de finition, et d'insuffler un fluide de soufflage (typiquement de l'air) dans l'ébauche pour la transformer en récipient.

Ainsi, on connaît les procédés dits d'extrusion- soufflage dans lesquels les ébauches, appelées paraisons, sont des tubes extrudés. Pour réaliser un récipient, une paraison est enfermée dans un moule, et de l'air est insufflé dans la paraison.

On connaît encore les procédés d'injection-soufflage dans lesquels les ébauches sont des préformes obtenues par injection de la matière plastique dans un moule ; ensuite, après leur fabrication, les préformes sont soit transférées vers le moule de finition, puis immédiatement transformées en récipients dans le moule de finition (procédés dits de cycle chaud), soit stockées ou transportées avant d'être ramollies par chauffage, transformées en récipients dans le moule (procédés dits de cycle froid).

Un inconvénient des machines connues pour la fabrication de corps creux réside dans la génération et le transfert du fluide de soufflage vers les ébauches.

En effet, le soufflage nécessite de fortes pressions (typiquement entre 10 et 20 bars dans le cas de l'extrusion-soufflage; de l'ordre de 40 bars dans le cas de l'injection-soufflage) et entraîne donc de fortes consommations de fluide. Le soufflage d'un corps creux d'un litre réalisé par extrusion-soufflage nécessite entre 10 et 20 litres de fluide ; le soufflage d'un corps creux d'un litre réalisé par injection-soufflage nécessite 40 litres de fluide.

Pour obtenir des pressions et débits suffisants eu égard aux cadences de fabrication (1200 récipients par heure et par moule dans les machines d'injection-soufflage de la demanderesse), les machines connues sont associées à au moins un compresseur qui fournit la haute pression nécessaire au soufflage.

Le compresseur fonctionne en continu pour pouvoir fournir la quantité d'air nécessaire à l'ensemble des moules que comporte l'installation, le soufflage ayant lieu, quant à lui, de façon séquentielle.

Les inconvénients principaux d'une telle structure sont les suivants :
- tout d'abord, en raison du fonctionnement permanent du compresseur alors que le soufflage s'effectue de façon séquentielle, il est nécessaire de prévoir des vannes, à commande électrique ou mécanique, pour autoriser ou interdire l'introduction du fluide de soufflage dans les moules. Ces vannes sont soumises en permanence, du côté amont, aux hautes pressions nécessaires au soufflage. Ce sont donc des organes qui doivent être résistants, et de conception coûteuse et complexe. Or, en raison des cadences auxquelles elles sont soumises, elles se détériorent rapidement. Elles constituent donc des pièces d'usure qu'il convient de remplacer relativement souvent ;
- les compresseurs utilisés sont des organes accessoires aux installations. Hormis leur coût et leur encombrement, il est nécessaire de prévoir des connexions fluidiques avec les installations. Ces connexions augmentent les risques de dysfonctionnement (fuites en cas de déconnexion) ;
- par ailleurs, en général un même compresseur est utilisé pour alimenter plusieurs installations. En cas de défaillance de cet organe, de grandes pertes de production peuvent en résulter, puisque plusieurs installations peuvent être tributaires d'un même compresseur ;
- avec les installations utilisant une technologie de carrousel tournant, dans laquelle les moules sont portés par le carrousel, il est nécessaire de prévoir un raccord tournant fluidique pour amener le fluide de soufflage haute pression vers les moules. Là encore, il s'agit d'une pièce très sensible avec des tolérances de fabrication très contraignantes.

L'invention a pour but de remédier à ces inconvénients.

Selon l'invention, un procédé pour fabriquer un corps creux par soufflage, à l'aide d'un fluide de soufflage, d'une ébauche dans un moule de finition, est caractérisé en ce qu'il consiste à associer à chaque moule une chambre de compression distincte constituée par un ensemble cylindre-piston ; à établir une pression initiale de fluide dans la chambre lorsqu'elle se trouve à son volume maximum ; à réduire le volume de la chambre pour comprimer le fluide, tout en maintenant isolés la chambre et l'intérieur de l'ébauche ; à mettre en communication la chambre et l'ébauche lorsque le volume de la chambre atteint une valeur déterminée pour amorcer le soufflage de l'ébauche par détente du fluide comprimé, à continuer la réduction de volume de la chambre jusqu'à un volume minimum, en maintenant la communication avec l'ébauche pour terminer le soufflage par compression du volume de fluide subsistant dans la chambre et transfert vers l'ébauche.

En associant à chaque moule une chambre de compression, à l'intérieur de laquelle la pression varie entre un minimum (pression initiale) et la pression de soufflage, il n'existe plus d'organe subissant en permanence cette dernière pression.

Dans une mise en oeuvre, une vanne commandée est disposée dans le circuit entre la chambre et le moule, mais cette vanne subit, côté amont, des cycles de montée et de baisse de pression. Elle est donc sollicitée de façon moins contraignante.

L'invention réduit la longueur des connexions fluidiques puisque la chambre peut être mise au plus près du moule correspondant.

Une installation n'est plus tributaire d'un compresseur. En conséquence, si une chambre est défaillante, il est possible de continuer à faire fonctionner le reste de l'installation au moins provisoirement. En outre, deux installations ne sont plus tributaires l'une de l'autre.

Enfin, des raccords tournants fluidiques haute pression ne sont plus nécessaires, même lorsque les moules sont portés par un carrousel, puisque chaque moule est associé à une chambre respective.

Un autre avantage de l'invention est que la compression de l'air le fait monter en température, ce qui favorise sensiblement le soufflage lorsque l'ébauche, donc le corps creux, est dans une matière thermoplastique. En effet, la température de l'air, si elle dépasse celle de ramollissement de la matière évite que la matière se fige lors du soufflage.

La pression de soufflage dépend, pour une grande part, de la pression initiale et, bien entendu, du rapport de compression. Elle dépend aussi de la position prédéterminée du piston à laquelle le soufflage est amorcé.

C'est pourquoi, de préférence, la pression initiale établie dans la chambre de compression est supérieure à la pression atmosphérique et, selon une autre caractéristique, est établie au moins en partie par une source de basse pression extérieure.

Par source de basse pression, il faut entendre une source industrielle couramment présente dans les entreprises, comprise par exemple, entre 1 et 15 bars, typiquement 7 bars.

En raison de sa faible valeur, il n'existe pas de problèmes de raccordement de même nature qu'avec une source de haute pression telle que cela se produisait avec les installations de l'art antérieur. Les risques de fuite sont limités et la technologie des raccords tant fixes que tournants est parfaitement maîtrisée et beaucoup plus simple.

Ainsi par exemple, avec une chambre de compression de volume initial de 1,5 litre, et de pression initiale de 7 bars, on gonfle un article de 300 cc à 35 bars (en amorçant la mise en communication entre la chambre et l'ébauche, donc le moule lorsque la position du piston est telle que le volume de la chambre atteint 300 cc).

Avec la même chambre, on n'atteindrait que 5 bars, si la pression initiale était la pression atmosphérique. Pour atteindre les 35 bars, et souffler un article de 300 cc, en partant de la pression atmosphérique, il faudrait que la chambre ait un volume initial de 7 x 1,5 litre, soit 10,5 litres.

L'installation pour la mise en oeuvre deviendrait un peut trop encombrante.

Selon une autre caractéristique, la pression initiale est obtenue, au moins en partie, en retournant, au moment de son dégazage, le fluide haute pression contenu dans le corps creux vers la chambre.

Selon une autre caractéristique, le circuit basse pression est connecté de façon à n'effectuer qu'un apport de fluide lorsque le cycle de soufflage est établi. Il apporte la totalité du fluide seulement lorsqu'aucun corps creux n'a été soufflé, ou lorsqu'une ébauche a éclaté lors du soufflage.

En effet, après soufflage, le volume global du circuit fluidique s'est accru d'une valeur correspondant à la différence entre le volume final du corps creux et le volume initial de l'ébauche. En négligeant le volume initial de l'ébauche et celui des communications entre la chambre et le moule, et en reprenant les mêmes paramètres qu'auparavant, le volume global du circuit fluidique serait de 1500 cc + 300 cc après soufflage, soit 1800 cc remplis avec 10,5 litres d'air, permettant d'obtenir une pression résiduelle, donc initiale, pour le soufflage suivant de 5,8 bars dans la chambre.

La source extérieure ne doit donc ramener que le complément pour obtenir les 7 bars nécessaires dans l'hypothèse considérée.

En agissant ainsi, on aboutit donc à une économie de l'ordre de 80 % en termes d'apport de fluide extérieur.

Sur ce plan, le procédé est auto-régulant : comme indiqué, si par hasard une ébauche éclate lors du soufflage, l'apport extérieur sera total lors du soufflage suivant.

Selon une autre caractéristique, un dispositif pour la mise en oeuvre du procédé comporte, associée à un moule, une chambre de compression constituée par un cylindre dans lequel est disposé un piston ; un circuit fluidique mettant en communication la chambre avec des moyens pour établir une pression initiale dans la chambre de compression ; des moyens pour mettre en communication la chambre de compression et l'intérieur d'une ébauche placée dans le moule lorsque la position du piston atteint une position prédéterminée, et en ce que la longueur du cylindre est telle, qu'après mise en communication, la course du piston continue pour achever le soufflage par transfert du volume de fluide subsistant dans la chambre vers l'ébauche.

Selon une autre caractéristique, une installation comportant au moins un dispositif pour le soufflage d'un corps creux, comporte par ailleurs : un châssis, de même qu'une structure tournant autour d'un pivot porté par le châssis de l'installation ; au moins un moule est fixé à ladite structure tournante et est associé à un dispositif respectif ; une première extrémité de chaque ensemble cylindre piston est reliée à un premier axe respectif porté par le châssis, parallèle à l'axe du pivot et éloigné de celui-ci d'une distance déterminant la course souhaitée du piston ; une seconde extrémité de chaque ensemble est reliée à un second axe respectif porté par la structure tournante en direction d'une zone périphérique de celle-ci.

Ainsi, en raison de l'excentration entre le premier axe et le pivot, on provoque un mouvement alternatif du piston relativement au cylindre lors de la rotation de la structure tournante. En fait, la distance entre le pivot et le premier axe correspond à la demi-course du piston.

Dans une mise en oeuvre préférée, c'est la tige de commande du piston qui est reliée au premier axe, et le cylindre, est relié au second axe.

Selon une autre caractéristique, l'installation comporte au moins deux moules et donc autant d'ensembles cylindre piston ; le premier axe est commun à chacun des ensembles et les seconds axes sont disposés sur la structure tournante en des emplacements différents, à égale distance du pivot.

Ainsi, chaque piston effectue le même mouvement que les autres avec un déphasage.

De préférence, dans ce cas, les seconds axes sont répartis angulairement de façon régulière sur la structure tournante.

Ainsi, le cycle est régulier.

D'autres caractéristiques et avantages de l'invention apparaîtront à la lecture de la description des figures annexées, ci-après, sur lesquelles:
- les figures 1a et 1b représentent schématiquement un ensemble chambre de compression/moule permettant la mise en oeuvre de l'invention
- les figures 2a à 2d représentent une variante perfectionnée d'un ensemble chambre de compression/moule ;
- les figures 3a et 3b représentent schématiquement le principe d'une installation comportant plusieurs ensembles conformes, soit à celui des figures la à 1b, soit à celui des figures 2a à 2d.

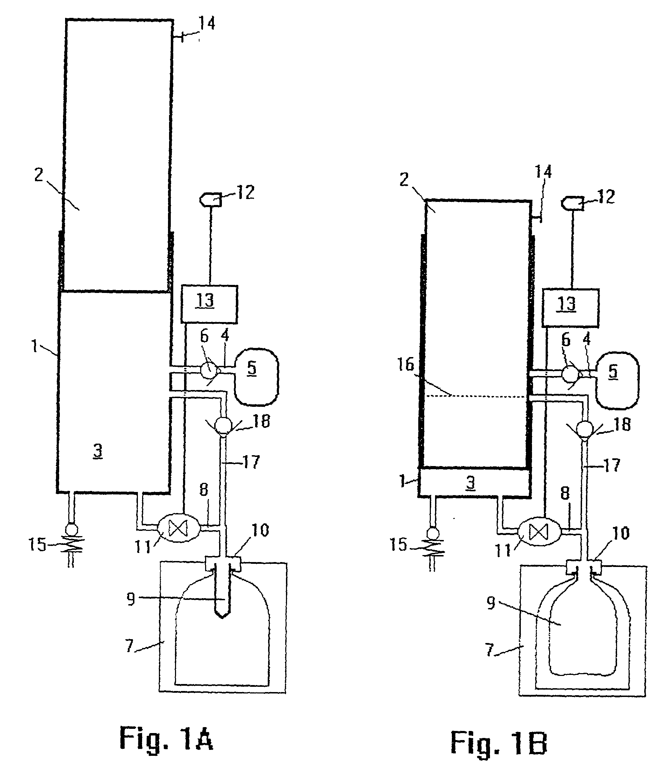

Sur la figure 1a est représenté un premier mode de réalisation possible d'un dispositif de mise en oeuvre de l'invention, lorsque la chambre est à son volume maximum.

Le dispositif comporte un cylindre 1 et un piston 2 délimitant une chambre de compression 3. Les moyens d'actionnement du piston relativement au cylindre ne sont pas représentés puisqu'il s'agit ici d'un schéma de principe.

La chambre 3 est reliée, par l'intermédiaire d'une liaison fluidique 4 à une source de fluide basse pression 5, dans l'exemple une source fournissant de l'air industriel à 7 bars.

Entre la source 5 et la chambre 4, un clapet 6 anti-retour est intercalé. Ce clapet permet de faire arriver la basse pression dans la chambre 3 uniquement quand la pression résiduelle est inférieure à celle de la source 5 (ici 7 bars). De préférence, un clapet est au plus près de la chambre pour limiter les volumes morts.

La chambre est par ailleurs reliée à un moule 7 de soufflage par une liaison fluidique 8.

Dans l'exemple, une ébauche 9 est présente dans le moule. Ici l'ébauche 9 est une préforme préalablement obtenue par injection, puis portée à une température de soufflage avant son introduction dans le moule 7. Il pourrait cependant s'agir d'une paraison obtenue par extrusion.

Des moyens 10, connus en soi, tels qu'une tuyère dans le cas d'une préforme ou une canule dans le cas d'une paraison, sont prévus pour mettre en communication la liaison fluidique 8 et l'intérieur de l'ébauche 9. Ces moyens, à la portée de l'homme du métier, de même que les moyens de mise en place de l'ébauche dans le moule, et les moyens de fermeture du moule, ne seront pas décrits plus en détail.

Une vanne 11 est placée dans le circuit fluidique 8 et permet la mise en communication entre la chambre 3 et l'ébauche 9 lorsque la position du piston atteint une position prédéterminée.

Pour cela, un détecteur 12 de la position du piston est prévu, qui est relié à une interface 13 de commande de l'ouverture et de la fermeture de la vanne 11.

Le détecteur 12 peut être de tout type approprié (optique, mécanique, électronique). Il peut être associé directement à l'ensemble piston/cylindre pour déterminer directement la position relative du piston par rapport au cylindre ; alternativement, lorsque cet ensemble est incorporé dans une machine ayant un fonctionnement cyclique, le détecteur peut être agencé pour déterminer à quel stade de son cycle se trouve la machine, afin que l'interface 13 donne les ordres d'ouverture ou de fermeture aux moments appropriés.

Ainsi, un seul et même détecteur peut commander plusieurs vannes par l'intermédiaire d'une interface appropriée.

Dans l'exemple, le détecteur 12 est de type optique. II détecte le passage d'un repère 14 porté par le piston.

Par ailleurs, de préférence, une soupape 15 de sécurité est prévue pour éviter toute détérioration du dispositif en cas de surpression accidentelle. Cette soupape est tarée à quelques bars au-dessus de la pression de soufflage souhaitée. Elle peut par exemple être tarée à 40 bars pour un soufflage prévu entre 35 et 38 bars.

Sur la figure 1b, est illustré le même dispositif alors que le corps creux est en cours de soufflage. Le piston 2 est rapproché de l'extrémité du cylindre 1, et la vanne 11 est ouverte. Plus précisément, l'ouverture de la vanne 11 est survenue alors que le détecteur 12 avait été activé par le passage du repère 14 ; le piston se trouvait alors dans la position matérialisée par le trait interrompu 16.

Le fonctionnement est le suivant : lorsque le piston est dans la position de la figure 1a, la pression initiale est établie dans la chambre (ici 7 bars et la vanne parallèle est fermée) ; le piston 2 est déplacé relativement au cylindre 1 pour en réduire le volume, la vanne 11 étant toujours fermée : il en résulte que la chambre monte en pression.

Au passage du repère 14, devant le détecteur 12 ou, plus généralement, à l'activation de l'interface 13, la vanne 11 est ouverte : le corps creux amorce son soufflage. Et le piston continue à se déplacer pour réduire le volume, continuant la compression, donc le soufflage du corps creux.

Toutefois, la structure qui vient d'être décrite nécessite à chaque soufflage une mise en pression initiale de la chambre 3 à l'aide du circuit basse pression.

En reprenant les exemples donnés au préambule, cela nécessiterait 1,5 litre d'air (ou de fluide) à 7 bars pour souffler un récipient de 300 cc à 35 bars, soit 10,5 litres d'air à la pression atmosphérique, pour chaque récipient de ce volume.

C'est pourquoi, de préférence, comme illustré sur ces figures 1a et 1b, on prévoit une liaison fluidique complémentaire 17 pour retourner, après soufflage, au moment du dégazage, le fluide haute pression contenu dans le corps creux vers la chambre 3.

Cette liaison met en communication la chambre 3 et le tronçon de la liaison 8 compris entre la vanne 11 et le moule 7. Un clapet anti-retour 18 est disposé dans cette liaison pour empêcher que, lors de la compression ou du souflage, le fluide contenu dans la chambre 3 n'aille directement dans le moule 7.

De préférence, comme illustré sur les figures, la liaison 17 ne débouche pas au fond du cylindre, mais sur la paroi du cylindre dans une zone comprise entre les deux positions extrêmes du piston. Ainsi, lorsqu'après soufflage, le piston 2 est déplacé de façon à augmenter le volume de la chambre, pour retourner vers la position initiale, l'air haute pression contenu dans le corps creux n'est pas immédiatement réintroduit dans la chambre. Ceci permet un temps de maintien en pression du corps creux dans le moule, par exemple pour favoriser sa mise en forme définitive.

Puis, lorsque le piston 2 est déplacé de façon à augmenter le volume de la chambre, le fluide en surpression contenu dans le corps creux retourne vers la chambre, lorsque la liaison 17 n'est plus obturée par le piston.

Toutefois, puisque le volume global du dispositif a augmenté lors du soufflage, un simple retour du fluide n'est pas suffisant pour obtenir la pression initiale souhaitée : un apport s'effectue donc automatiquement à partir de la source 5.

Par ailleurs, de préférence, pour favoriser l'envoi du fluide du corps creux vers la chambre, et réduire au minimum l'apport de fluide basse pression, la liaison 4 débouche dans la paroi du cylindre entre le débouché de la liaison 17 et la position distale du piston 2 par rapport au fond du cylindre, c'est-à-dire la position dans laquelle le volume de la chambre est maximum.

Ainsi, après soufflage, lorsque le volume de la chambre augmente, l'air contenu dans le corps creux est introduit dans la chambre avant celui de la source 5 de basse pression qui n'effectue que l'apport nécessaire.

Le dispositif des figures 1a et 1b permet donc de souffler des corps creux de façon quasi automatique. Toutefois, il nécessite l'emploi d'une vanne qui, sans être sollicitée de la même manière qu'avec les dispositifs de l'art antérieur, puisqu'elle subit des variations cycliques de pression, n'est cependant pas soumise en permanence à une haute pression.

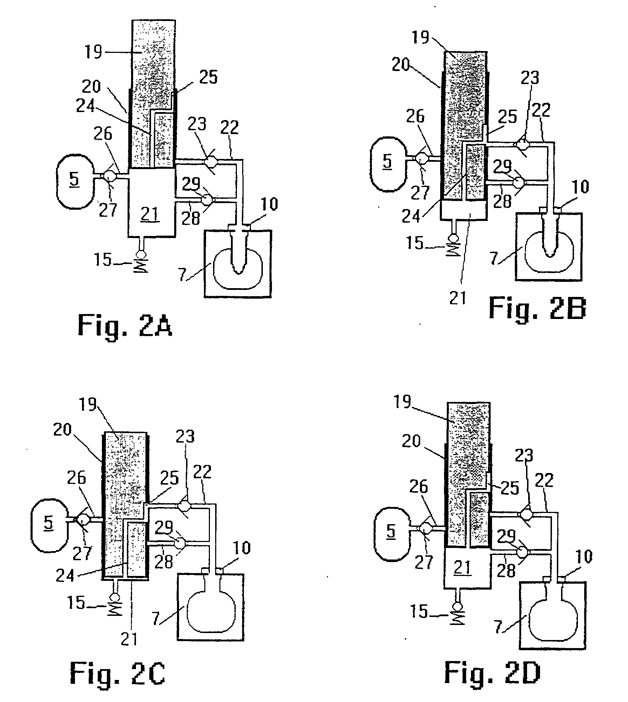

Toutefois, on lui préfère le dispositif illustré sur les figures 2a à 2d qui ne nécessite plus de vanne, ni de détecteur et permet un soufflage automatique.

Le dispositif comporte un piston 19 coulissant dans un cylindre 20 pour délimiter une chambre de compression 21. Une soupape de sécurité 15 est prévue comme dans le cas des figures 1a et 1b.

Le piston peut se déplacer entre une position où le volume de la chambre est maximum (fig. 2a) et une position dans laquelle ce volume est minimum (fig. 2c). Une conduite ou liaison fluidique 22 débouche par une première extrémité dans le cylindre 20, au travers de sa paroi, dans une zone en regard du piston 19 à tout moment de sa course. Cette conduite 22 est mise en communication, par sa seconde extrémité, avec les moyens 10 de soufflage, connus en soi, et associés au moule 7.

Un clapet anti-retour 23 est disposé sur la conduite 22 pour éviter un retour de fluide (air) du récipient vers le cylindre, comme il sera expliqué ultérieurement.

Un orifice 24 est ménagé dans la masse du piston. Il débouche, d'une part, dans la chambre 21 de compression et d'autre part, dans un lamage 25 ménagé à la périphérie du piston.

La position du lamage est telle que, lorsque le piston arrive dans la position déterminée pour amorcer le soufflage, le lamage arrive en regard de la conduite 22, de sorte que ce dernier n'est plus obturé et une communication est alors assurée entre la chambre 21 et la conduite 22 par l'intermédiaire de l'orifice 24 et du lamage 25 ménagés dans le piston.

En outre, les dimensions du lamage sont telles que, pendant que le piston continue la course pour réduire le volume de la chambre, le fluide comprimé continue à se diriger vers le moule 7 par l'intermédiaire de l'orifice 24, du lamage 25 et de la conduite 22.

Ainsi, sur la figure 2b est illustré l'instant où le piston 19, en cours de compression, vient de dépasser la position pour amorcer le soufflage : une circulation de fluide peut s'établir entre la chambre 21 et le moule 7, plus précisément, entre la chambre et l'ébauche 9 disposée dans le moule.

Sur la figure 2c est illustrée la position du piston en fin de soufflage : le volume de la chambre 21 est minimum, mais le moule 7 est toujours en communication avec la chambre par l'orifice 24, le lamage 25 et la conduite 22.

Le clapet anti-retour 23, situé sur la conduite 22, a pour fonction d'empêcher que le fluide sous pression, contenu dans le corps creux à l'issue du soufflage, ne retourne vers la chambre 21 lorsque le piston amorce son mouvement de retour à sa position initiale, alors que le lamage 25 est toujours en regard de l'orifice 22. Ainsi, la haute pression est maintenue à l'issue du soufflage dans le corps creux permettant sa stabilisation.

Une autre conduite 26 met en communication la chambre 21 et une source 5 de fluide basse pression, pour initialiser la pression dans la chambre lorsque la position du piston est telle que le volume de la chambre est maximum (ou proche du maximum).

Un clapet anti-retour 27 est prévu dans la conduite 26 pour éviter que, lorsque le piston 19 comprime le fluide dans la chambre, du fluide ne s'échappe vers la source 5.

La structure qui vient d'être décrite permet de réaliser un soufflage automatique de corps creux. Elle nécessite cependant que l'initialisation de pression soit totalement effectuée avec la source 5 extérieure.

C'est pourquoi, pour éviter une trop grande consommation sur la source 5 extérieure, on prévoit, dans un mode de réalisation préféré, qu'une partie au moins du fluide sous pression contenu dans le corps creux à l'issue du soufflage soit évacuée vers la chambre.

A cet effet, une conduite 28 est prévue entre la chambre et le moule. Sur cette conduite, un clapet anti-retour 29 est disposé de façon telle qu'il bloque tout transfert de fluide de la chambre 21 vers le moule 7 par l'intermédiaire de la conduite 28. Ce clapet autorise seulement un transfert du corps creux vers la chambre, lorsque la pression résiduelle dans le corps creux est supérieure à celle de la chambre.

De préférence, pour permettre un maintien de la pression dans le corps creux à l'issue du soufflage, par exemple pour aider à sa stabilisation, la conduite 28 débouche non pas dans le fond du cylindre, mais au travers de sa paroi, dans un emplacement qui est bouché par le piston pendant une partie de son mouvement de retour vers le volume maximum. La conduite 28 ne permet donc le transfert du fluide du corps creux vers la chambre que lorsque le piston commence à dégager la conduite. Ainsi, sur la figure 2d, la conduite 28 est totalement dégagée par le piston en cours de mouvement pour augmenter le volume de la chambre : le fluide dans le corps creux peut se diriger vers la chambre (tant que la pression dans le corps creux est supérieure à celle de la chambre).

Comme dans le cas des figures 1a et 1b, le dispositif ne permet pas une initialisation complète de la chambre, après soufflage d'un corps creux, à partir de la pression contenue dans ce dernier, en raison notamment de la variation de volume due au soufflage.

Toutefois, comme dans le cas précédent, de préférence afin de favoriser la réutilisation du fluide contenu dans le corps creux, la conduite 26, reliée à la source 5 de basse pression, est disposée de façon telle que le maximum de fluide contenu dans le corps creux soit transféré vers la chambre avant que le fluide basse pression ne soit envoyé vers la chambre.

Pour ce faire, par exemple, comme illustré par les figures 2a à 2d, cette conduite 26 débouche dans une zone de la paroi du cylindre plus éloignée du fond du cylindre que la conduite 28 de transfert du fluide du corps creux vers la chambre. Ainsi, le fluide basse pression ne peut être transféré de la source 5 vers la chambre 21 que lorsque le piston n'est pas en regard de la conduite 26 et lorsque la pression dans la chambre est inférieure à celle de la source.

Sur la figure 2a, le piston est en position de volume maximum ; la conduite 26 est débouchée : l'initialisation peut avoir lieu. Il convient de noter que, si un corps creux a été préalablement soufflé, une partie du fluide qu'il contenait a été réintroduite dans la chambre 21 puisque la conduite 28 est ouverte dans la chambre.

Sur la figure 2b, le piston 19 a comprimé le fluide dans la chambre 21 et la conduite 22 arrive en regard du lamage : le soufflage commence.

Sur la figure 2c, le piston est en bout de course (volume minimum) ; la compression s'achève, mais le fluide contenu dans le corps creux ne peut retourner vers la chambre en raison de l'action du clapet anti-retour 23 et de l'obturation de la conduite 28 par le piston.

Sur la figure 2d, la conduite 28 est dégagée, suite au mouvement du piston 19 vers la position de volume maximum : un transfert peut avoir lieu du corps creux vers la chambre 21.

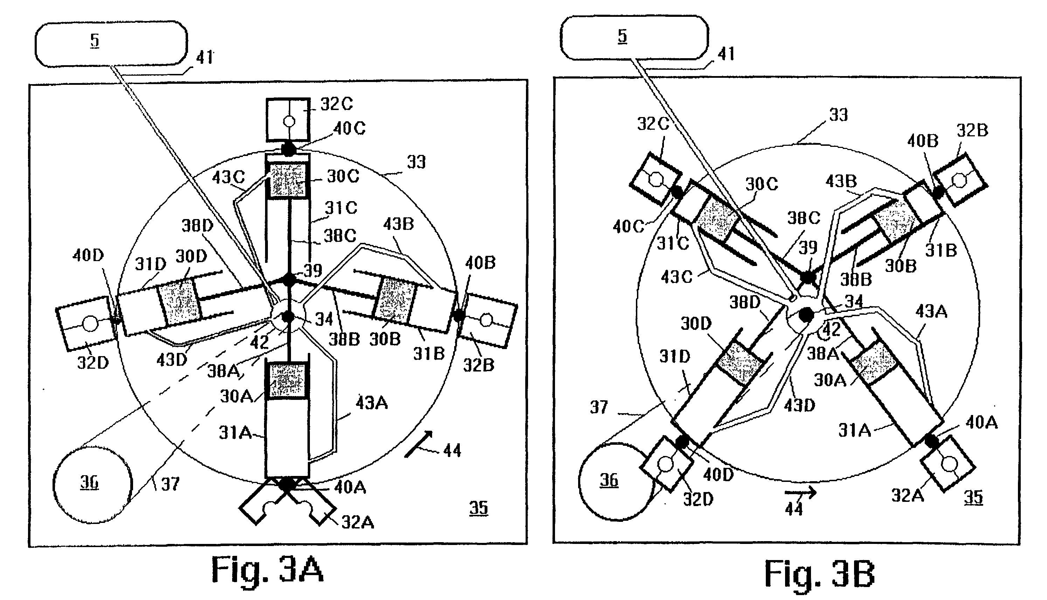

Les figures 3a et 3b illustrent le schéma de principe d'une installation mettant en oeuvre l'invention de façon très avantageuse.

Dans l'exemple, l'installation comporte quatre ensembles piston 30a, 30b, 30c, 30d - cylindre 31a, 31b, 31c, 31d, associés chacun à un moule 32a, 32b, 32c, 32d respectif.

Une structure tournante 33, telle qu'un carrousel, est entraînée en rotation autour d'un pivot 31 porté par le châssis 35 de l'installation.

Un moteur 36, électrique de préférence, entraîne le carrousel par l'intermédiaire d'une courroie 37.

Dans le mode de réalisation préféré, illustré par ces figures, chaque piston est fixé à la première extrémité d'une tige 38a, 38b, 38c, 38d respective, dont l'autre extrémité est reliée à un axe commun 39, porté par le châssis 35, parallèle à l'axe du pivot et éloigné de ce dernier d'une distance correspondant à la demi-course du piston.

Les cylindres sont, quant à eux, articulés sur un axe respectif 40a, 40b, 40c, 40d porté par la structure tournante 33, en direction de la périphérie de celle-ci. Chacun des axes est à égale distance du pivot 34.

Alternativement, il pourrait être envisagé d'articuler les cylindres sur l'axe 39 commun, et les pistons, par l'intermédiaire de leurs tiges, sur les axes 40a, 40b, 40c, 40d respectifs. L'encombrement serait cependant plus difficile à maîtriser.

De préférence, comme illustré par ces figures 3a et 3b, les axes 40a, 40b, 40c, 40d sont angulairement répartis de façon régulière sur la structure tournante.

En raison de l'excentration entre le pivot 34 et l'axe commun 39, une rotation de la structure provoque le déplacement de chaque piston dans son cylindre respectif. En outre, en raison de cette excentration, les tiges 38a, 38b, 38c, 38d comme les cylindres oscillent dans le plan horizontal respectivement par rapport à l'axe commun 39 et aux axes respectifs 40a, 40b, 40c, 40d.

Une source de basse pression 5, pour initialiser la pression dans les cylindres est disposée à l'extérieur de la structure tournante, et est reliée à cette dernière par une conduite 41 aboutissant sur un raccord tournant basse pression 42, de préférence aligné sur l'axe du pivot 34.

Des conduites 43a, 43b, 43c, 43d partent du raccord tournant vers les cylindres.

Afin de ne pas surcharger ces figures 3a et 3b, le détail des connexions entre chaque moule et l'ensemble cylindre-piston associé n'a pas été représenté, d'autant plus que le schéma de principe illustré par les figures 3a et 3b s'applique indifféremment à la première variante (figures 1a et 1b) et à la seconde (figures 2a à 2d).

De même, le détail des dispositifs d'ouverture / fermeture des moules, d'introduction des ébauches et de sortie des corps creux n'a pas été représenté.

En supposant que la structure tourne dans le sens de la flèche 44, le fonctionnement s'établit de la façon suivante.

La chambre délimitée par le piston 30a et le cylindre 31a est à son volume maximum. Ceci correspond à la position de la figure 2a.

Le moule correspondant 32a est représenté ouvert car c'est lorsqu'un piston est dans cette position qu'il est possible de décharger un corps creux terminé et de charger une ébauche.

En fait, le déchargement peut commencer légèrement avant que le piston n'ait atteint cette position, c'est-à-dire plus précisément quand le corps creux est dégazé.

La fermeture du moule, après chargement d'une ébauche, doit être, quant à elle, effective, avant que le piston n'ait atteint la position déterminée à partir de laquelle le soufflage peut commencer.

Le piston 30b est en cours de compression de la chambre correspondante, sans avoir atteint la position de soufflage.

Le piston 30c est en position extrême. Le soufflage est terminé dans cet ensemble. A titre indicatif, ceci correspond à la position de la figure 2c.

Le piston 30d est en cours de déplacement augmentant le volume de la chambre correspondante. Ceci correspond approximativement à la position de la figure 2d (transfert du fluide du corps creux vers la chambre).

Sur la figure 3b, le piston 30a a commencé sa course de compression ; le piston 30b a atteint la position où le soufflage peut commencer ; le piston 30c est dans une position intermédiaire à celle des figures 2c et 2d (stabilisation du corps creux) ; le piston 30d est dans une position où les pressions sont équilibrées entre la chambre et le corps creux. Le moule peut donc être ouvert pour sortir le corps creux ; parallèlement, un apport peut être fait à partir de la source 5 du fluide basse pression.

Comme il résulte de ce qui précède, l'invention est applicable aux installations d'injection-soufflage ou d'extrusion-soufflage. Elle offre un intérêt primordial dans le cas des installations d'injection-soufflage puisqu'elle permet de s'affranchir notamment des raccords tournants haute pression et des problèmes inhérents aux compresseurs.

Elle trouve un intérêt tout particulier pour le soufflage de petits articles, c'est-à-dire pour des volumes de l'ordre d'un litre ou moins : au-delà, si on veut rester tributaire de basses pressions disponibles industriellement, il faut augmenter notablement les volumes des chambres de compression et on aboutit rapidement à un encombrement irréaliste.

Bien entendu, l'invention n'est pas limitée aux modes de réalisation décrits et spécifiquement revendiqués ; elle en embrasse tous les équivalents à la portée de l'homme du métier.

## Revendications

1. Procédé pour fabriquer un corps creux par soufflage, à l'aide d'un fluide de soufflage, d'une ébauche dans un moule de finition, **caractérisé en ce qu'**il consiste à associer à chaque moule (7 ;32a ;32b ;32c ;32d) une chambre (3 ;21) de compression distincte, constituée par un ensemble cylindre(1 ;20 ;31a...31d) - piston (2 ;19 ;30a...30d) ; à établir une pression initiale de fluide dans la chambre lorsqu'elle se trouve à son volume maximum ; à réduire le volume de la chambre pour comprimer le fluide, tout en maintenant isolés la chambre et l'intérieur de l'ébauche ; à mettre en communication (8 ;22,24,25) la chambre et l'ébauche lorsque le piston atteint une position prédéterminée pour amorcer le soufflage de l'ébauche par détente du fluide comprimé, à continuer la réduction de volume de la chambre jusqu'à un volume minimum, en maintenant la communication avec l'ébauche pour terminer le soufflage par compression du volume de fluide subsistant dans la chambre et transfert vers l'ébauche.

2. Procédé selon la revendication 1, **caractérisé en ce que** la pression initiale est établie dans la chambre (3 ;21) au moins en partie à l'aide d'une source (5) extérieure de fluide basse pression reliée à la chambre par un circuit de basse pression (4 ;26).

3. Procédé selon la revendication 2, **caractérisé en ce que** la source de basse pression délivre une pression choisie entre 1 et 15 bars.

4. Procédé selon la revendication 3, **caractérisé en ce que** la source de basse pression délivre une pression choisie de 7 bars.

5. Procédé selon la revendication 2, **caractérisé en ce qu'**il consiste à prévoir des moyens d'isolement (6 ;27) entre la chambre et le circuit de fluide de basse pression, afin d'éviter que du fluide contenu dans la chambre ne soit réinjecté vers le circuit basse pression.

6. Procédé selon la revendication 1, **caractérisé en ce que** la pression initiale est établie dans la chambre (3 ;21), au moins en partie, en retournant, au moment de son dégazage, le fluide haute pression contenu dans le corps creux vers la chambre.

7. Procédé selon les revendications 2 et 6, **caractérisé en ce que** la source (5) de basse pression effectue un apport complémentaire à celui du dégazage pour obtenir la pression initiale lorsqu'un corps creux a été soufflé dans le moule lors du cycle précédent.

8. Procédé selon l'une quelconque des revendications 1 à 7, **caractérisé en ce qu'**il consiste à maintenir pendant une durée déterminée le fluide sous pression contenu dans le corps creux après son soufflage.

9. Dispositif pour la mise en oeuvre du procédé selon l'une des revendications 1 à 8, **caractérisé en ce qu'**il comporte, associée à un moule (7; 32a ; ... ; 32d), une chambre de compression (3; 21) constituée par un cylindre (1; 20; 31a; ... ; 31d) dans lequel est disposé un piston (2 ; 19 ; 30a ; ... ; 30d) ; un circuit fluidique (4 ; 26 ; 41, 43a, ..., 43d) mettant en communication la chambre avec des moyens (5) pour établir une pression initiale dans la chambre lorsqu'elle se trouve à son volume maximum tout en étant isolée de l'intérieur de l'ébauche (9) ; des moyens (8, 11, 12, 13 ; 22, 23, 24, 25) pour mettre en communication la chambre de compression et l'intérieur de l'ébauche (9) placée dans le moule, lorsque le piston atteint une position prédéterminée, et **en ce que** la longueur du cylindre est telle que, après mise en communication entre la chambre et l'ébauche, la course du piston peut continuer, pour achever le soufflage par transfert du volume de fluide subsistant dans la chambre vers l'ébauche.

10. Dispositif selon la revendication 9, **caractérisé en ce que** les moyens pour mettre en communication la chambre de compression (3) et l'ébauche (9) sont constitués par une liaison fluidique (8) débouchant d'une part au fond de la chambre, d'autre part dans l'ébauche, et **en ce qu'**une vanne (11), dont l'ouverture et la fermeture sont commandées par des moyens de détection (12) de la position du piston associés à une interface de commande (13), est disposée dans ladite liaison.

11. Dispositif selon la revendication 9, **caractérisé en ce que** les moyens pour mettre en communication la chambre de compression (21) et l'ébauche (9) comprennent : d'une part, une conduite (22) dont une première extrémité débouche dans le cylindre (20) au travers de sa paroi, dans une zone en regard du piston (19) à tout moment de sa course, et dont une seconde extrémité communique avec les moyens (10) de soufflage associés au moule (7) ; d'autre part, un orifice (24) ménagé dans le piston, dont une première extrémité débouche dans la chambre (21) de compression et une seconde extrémité débouche dans un lamage (25) ménagé à la périphérie du piston, et **en ce que** la position du lamage est telle que, lorsque le piston arrive dans la position prédéterminée pour amorcer le soufflage, le lamage (25) arrive en regard de la première extrémité de la conduite (22), et **en ce que** les dimensions du lamage sont telles que, lorsque le piston continue sa course pour achever le soufflage, le lamage (25) est toujours en regard de la conduite (22).

12. Dispositif selon la revendication 11, **caractérisé en ce qu'**un clapet anti-retour (23) est disposé sur la conduite (22) pour éviter un retour de fluide du corps creux vers la chambre lorsque le piston a terminé sa course et amorce son mouvement de retour vers sa position initiale, alors que le lamage (25) est toujours en regard de l'orifice (22).

13. Dispositif selon l'une des revendications 9 à 12, **caractérisé en ce que** la chambre (3 ;21) est relié à une source (5) de fluide basse pression par une liaison (4 ;26 ;41 ;42 ;43a...43d) dans laquelle sont prévus des moyens anti-retour (6 ;27) pour empêcher qu'après le commencement de la compression du fluide ne soit renvoyé vers la source (5).

14. Dispositif selon la revendication 13, **caractérisé en ce que** la liaison (4 ;26 ;43a...43d) débouche dans la chambre au travers de la paroi du cylindre (1 ;20 ;31a...31d) dans une zone comprise entre les deux positions extrêmes du piston de façon que ladite liaison soit obturée par le piston pendant une partie de sa course.

15. Dispositif selon l'une des revendications 9 à 13 **caractérisé en ce que** la chambre est mise en communication avec le moule (7) par une liaison (17 ;28) pourvue de moyens anti-retour (18 ;29) pour empêcher que, lors de la compression, le fluide ne soit transféré directement vers le moule alors que la pression suffisante n'est pas ateinte, et pour permettre un retour, après soufflage, du fluide sous pression contenu dans le corps creux vers la chambre.

16. Dispositif selon la revendication 15, **caractérisé en ce que** la liaison (17 ;28) débouche dans la chambre au travers de la paroi du cylindre, dans une zone comprise entre les deux positions extrêmes du piston, de façon que ladite liaison soit obturée par le piston pendant une partie de sa course.

17. Dispositif selon les revendications 14 et 16, **caractérisé en ce que** la liaison (14 ;26 ;43a...43d) entre la chambre et la source (5) de basse pression débouche dans une zone de la paroi du cylindre plus éloignée du fond de ce dernier que la liaison (17, ;28) entre la chambre et le moule.

18. Dispositif selon l'une des revendications 9 à 17, **caractérisé en ce qu'**il comporte une soupape (15) de sécurité pour éviter les surpressions, disposée au fond de la chambre.

19. installation comprenant au moins un dispositif selon l'une des revendications 9 à 18, carctérisée en ce qu'elle comporte en outre un châssis (35), une structure (33) tournant autour d'un pivot (34) porté par le châssis et au moins un moule (32a ;...32c) fixé à ladite structure et associé à un dispositif respectif ; et en qu'une première extrémité de chaque ensemble cylindre-piston (31a,30a ;... ;31d,30d) est reliée à un premier axe (39) respectif porté par le châssis, parallèle à l'axe du pivot et éloigné de celui-ci d'une distance déterminant la course souhaitée du piston ; et en ce qu'une seconde extrémité de chaque ensemble cylindre-piston est reliée à un second axe (40a ;... ;40d) respectif parallèle au premier et porté par la structure tournante (33) en direction d'une zone périphérique de celle-ci.

20. Installation selon la revendication 19, **caractérisé en ce qu'**un piston comportant une tige (38a ;...38d) de commande, cette dernière est reliée audit premier axe (39) et le cylindre est relié audit second axe (40a ;... ;40d).

21. Installation selon l'une des revendications 19 et 20, **caractérisée en ce qu'**elle comporte au moins deux dispositifs, **en ce que** le premier axe (39) est commun à chacun des dispositifs et les seconds (40a ;... ;40d) axes sont disposés sur la structure tournante (33) à égale distance du pivot (34).

22. Installation selon la revendication 21, **caractérisé en ce que** lesdits seconds axes (40a ;... ;40d) sont angulairement répartis de façon régulière sur la structure tournante.

23. Installation selon l'une des revendications 19 à 22, **caractérisé en ce qu'**elle est reliée à une source basse pression (5) extérieure et un raccord tournant (42) basse pression est disposé dans l'axe du pivot (34).

## Patentansprüche

1. Verfahren zur Herstellung eines Hohlkörpers eines Blasformrohlings in einem Endbearbeitungsformwerkzeug durch Blasformen mittels eines Blasfluids, **dadurch gekennzeichnet, daß** man jedem Formwerkzeug (7; 32a; 32b; 32c; 32d) eine verschiedene Druckkammer (3; 21) zuordnet, die durch eine aus einem Zylinder (1; 20; 31a...31d) und einem Kolben (2; 19; 30a...30d) bestehende Anordnung gebildet wird; in der Kammer einen Fluidanfangsdruck aufbaut, wenn sie sich auf ihrem maximalen Volumen befindet; das Volumen der Kammer verringert, um das Fluid zu komprimieren, wobei die Kammer und der Innenraum des Blasformrohlings voneinander getrennt gehalten werden; die Kammer und den Blasformrohling in Verbindung setzt (8; 22, 24, 25), wenn der Kolben eine vorbestimmte Position erreicht, um das Blasformen des Blasformrohlings durch Entspannung des komprimierten Fluids einzuleiten; das Volumen der Kammer weiter verringert, bis ein minimales Volumen erreicht ist, wobei die Verbindung mit dem Blasformrohling aufrechterhalten wird, um das Blasformen durch Komprimieren des in der Kammer vorhandenen Fluidvolumens und Transfer zum Blasformrohling zu beenden.

2. Verfahren nach Anspruch 1, **dadurch gekennzeichnet, daß** der Anfangsdruck in der Kammer (3; 21) zumindest teilweise mittels einer externen Niederdruckfluidquelle (5) aufgebaut wird, die durch einen Niederdruckkreis (4; 26) mit der Kammer verbunden ist.

3. Verfahren nach Anspruch 2, **dadurch gekennzeichnet, daß** die Niederdruckquelle einen gewählten Druck zwischen 1 and 15 bar liefert.

4. Verfahren nach Anspruch 3, **dadurch gekennzeichnet, daß** die Niederdruckquelle einen gewählten Druck von 7 bar liefert.

5. Verfahren nach Anspruch 2, **dadurch gekennzeichnet, daß** man zwischen der Kammer und dem Niederdruckfluidkreis Trennmittel (6; 27) vorsieht, um zu vermeiden, daß in der Kammer enthaltenes Fluid wieder in den Niederdruckkreis injiziert wird.

6. Verfahren nach Anspruch 1, **dadurch gekennzeichnet, daß** der Anfangsdruck in der Kammer (3; 21) zumindest teilweise dadurch aufgebaut wird, daß das im Hohlkörper enthaltene Hochdruckfluid zum Zeitpunkt seiner Entgasung zur Kammer zurückgeführt wird.

7. Verfahren nach den Ansprüchen 2 und 6, **dadurch gekennzeichnet, daß** die Niederdruckquelle (5) eine zusätzliche Zufuhr als Ergänzung zu der der Entgasung durchführt, um den Anfangsdruck zu erreichen, wenn der Hohlkörper beim vorhergehenden Zyklus in dem Formwerkzeug blasgeformt worden ist.

8. Verfahren nach einem der Ansprüche 1 bis 7, **dadurch gekennzeichnet, daß** man während einer vorbestimmten Zeitdauer das im Hohlkörper enthaltene Fluid nach seinem Blasformen unter Dauerdruck hält.

9. Vorrichtung zur Durchführung des Verfahrens nach einem der Ansprüche 1 bis 8, **dadurch gekennzeichnet, daß** sie eine einem Formwerkzeug (7; 32a; ...; 32d) zugeordnete Druckkammer (3; 21), die aus einem Zylinder (1; 20; 31a; ...; 31d), in dem ein Kolben (2; 19; 30a; ...; 30d) angeordnet ist, besteht; einen Fluidkreis (4; 26; 41, 43a, ..., 43d), der die Kammer mit den Mitteln (5) zum Aufbau eines Anfangsdrucks in der Kammer in Verbindung setzt, wenn sie sich auf ihrem maximalen Volumen befindet, wobei sie vom Innenraum des Blasformrohlings (9) getrennt ist; Mittel (8, 11, 12, 13; 22, 23, 24, 25) zur Herstellung einer Verbindung zwischen der Druckkammer und dem Innenraum des in dem Formwerkzeug plazierten Blasformrohlings (9), wenn der Kolben eine vorbestimmte Position erreicht, umfaßt und daß die Länge des Zylinders derart ist, daß der Kolbenhub nach der Verbindungsherstellung zwischen der Kammer und dem Blasformrohling weitergehen kann, um das Blasformen durch Transfer des in der Kammer vorhandenen Fluidvolumens zum Blasformrohling zu beenden.

10. Vorrichtung nach Anspruch 9, **dadurch gekennzeichnet, daß** die Mittel zur Verbindungsherstellung zwischen der Druckkammer (3) und dem Blasformrohling (9) durch eine Fluidverbindung (8) gebildet werden, die einerseits am Boden der Kammer und andererseits im Blasformrohling mündet, und daß in der Verbindung ein Ventil (11) vorgesehen ist, dessen Öffnen und Schließen durch die einer Steuerschnittstelle (13) zugeordneten Mittel (12) zur Erfassung der Position des Kolbens gesteuert wird.

11. Vorrichtung nach Anspruch 9, **dadurch gekennzeichnet, daß** die Mittel zur Verbindungsherstellung zwischen der Druckkammer (21) und dem Blasformrohling (9) einerseits eine Leitung (22), von der ein erstes Ende im Zylinder (20) durch seine Wand in einem Bereich mündet, der sich zu jedem Zeitpunkt des Kolbenhubs gegenüber dem Kolben (19) befindet, und von der ein zweites Ende mit den dem Formwerkzeug (7) zugeordneten Blasformmitteln (10) in Verbindung steht; und andererseits eine im Kolben ausgebildete Öffnung (24) umfassen, von der ein erstes Ende in der Druckkammer (21) und ein zweites Ende in einer am Umfang des Kolbens ausgebildeten Senkung (25) mündet, und daß die Senkung (25) derart positioniert ist, daß sie, wenn der Kolben in der vorbestimmten Position zur Einleitung des Blasformens ankommt, gegenüber dem ersten Ende der Leitung (22) ankommt, und daß die Senkung (25) derart dimensioniert ist, daß sie sich, wenn sich der Kolben weiterbewegt, um das Blasformen zu beenden, immer gegenüber der Leitung (22) befindet.

12. Vorrichtung nach Anspruch 11, **dadurch gekennzeichnet, daß** eine Rückschlagklappe (23) an der Leitung (22) angeordnet ist, um eine Rückkehr des Fluids vom Hohlkörper zur Kammer zu verhindern, wenn der Kolben seinen Hub beendet hat und mit seiner Rückkehrbewegung in die Anfangsposition beginnt, während sich die Senkung (25) immer gegenüber der Öffnung (22) befindet.

13. Vorrichtung nach einem der Ansprüche 9 bis 12, **dadurch gekennzeichnet, daß** die Kammer (3; 21) über eine Verbindung (4; 26; 41; 42; 43a...43d), in der Rückschlagmittel (6; 27) vorgesehen sind, um eine Rückkehr des Fluids zur Quelle (5) nach Beginn der Komprimierung des Fluids zu vermeiden, mit einer Niederdruckfluidquelle (5) verbunden ist.

14. Vorrichtung nach Anspruch 13, **dadurch gekennzeichnet, daß** die Verbindung (4; 26; 43a...43d) durch die Wand des Zylinders (1; 20; 31a...31d) in einem Bereich in der Kammer mündet, der sich zwischen den beiden Endpositionen des Kolbens befindet, so daß die Verbindung während eines Teils des Kolbenhubs durch den Kolben verschlossen wird.

15. Vorrichtung nach einem der Ansprüche 9 bis 13, **dadurch gekennzeichnet, daß** die Kammer durch eine Verbindung (17; 28), die mit Rückschlagmitteln (18; 29) versehen ist, die verhindern, daß bei der Komprimierung das Fluid direkt in das Formwerkzeug übertragen wird, wenn der ausreichende Druck nicht erreicht ist, und die nach dem Blasformen eine Rückkehr des im Hohlkörper enthaltenen druckbeaufschlagten Fluids in die Kammer gestatten, mit dem Formwerkzeug (7) verbunden ist.

16. Vorrichtung nach Anspruch 15, **dadurch gekennzeichnet, daß** die Verbindung (17; 28) durch die Wand des Zylinders in einem Bereich in der Kammer mündet, der sich zwischen den beiden Endpositionen des Kolbens befindet, so daß die Verbindung während eines Teils des Kolbenhubs durch den Kolben verschlossen wird.

17. Vorrichtung nach den Ansprüchen 14 und 16, **dadurch gekennzeichnet, daß** die Verbindung (14; 26; 43a...43d) zwischen der Kammer und der Niederdruckquelle (5) in einem Bereich der Wand des Zylinders mündet, die weiter vom Boden des letzteren entfernt ist als die Verbindung (17; 28) zwischen der Kammer und dem Formwerkzeug.

18. Vorrichtung nach einem der Ansprüche 9 bis 17, **dadurch gekennzeichnet, daß** sie ein am Boden der Kammer angeordnetes Sicherheitsventil (15) zur Vermeidung von Überdrücken umfaßt.

19. Anlage mit mindestens einer Vorrichtung nach einem der Ansprüche 9 bis 18, **dadurch gekennzeichnet, daß** sie des weiteren einen Rahmen (35), eine sich um einen vom Rahmen getragenen Drehzapfen (34) drehende Konstruktion (33) und mindestens ein an der Konstruktion befestigtes und einer jeweiligen Vorrichtung zugeordnetes Formwerkzeug (32a; ...32c) umfaßt; und daß ein erstes Ende jeder Zylinder-Kolben-Anordnung (31a, 30a; ...; 31d, 30d) mit einer jeweiligen, vom Rahmen getragenen ersten Achse (39) verbunden ist, die parallel zur Schwenkachse verläuft und in einem Abstand davon angeordnet ist, der den gewünschten Kolbenhub bestimmt; und daß ein zweites Ende jeder Zylinder-Kolben-Anordnung mit einer jeweiligen zweiten Achse (40a;...; 40) verbunden ist, die parallel zur ersten verläuft und von der Drehkonstruktion (33) in Richtung eines Umfangsbereichs davon getragen wird.

20. Anlage nach Anspruch 19, **dadurch gekennzeichnet, daß** ein Kolben eine Steuerstange (38a;...38d) aufweist, die mit der ersten Achse (39) verbunden ist, und der Zylinder mit der zweiten Achse (40a; ...; 40d) verbunden ist.

21. Anlage nach einem der Ansprüche 19 und 20, **dadurch gekennzeichnet, daß** sie mindestens zwei Vorrichtungen umfaßt, daß die erste Achse (39) jeder der Vorrichtungen gemein ist und die zweiten (40a;...; 40d) Achsen im gleichen Abstand vom Drehzapfen (34) an der Drehkonstruktion (33) angeordnet sind.

22. Anlage nach Anspruch 21, **dadurch gekennzeichnet, daß** die zweiten Achsen (40a; ...; 40d) winkelförmig und gleichmäßig um die Drehkonstruktion verteilt sind.

23. Anlage nach einem der Ansprüche 19 bis 22, **dadurch gekennzeichnet, daß** sie mit einer externen Niederdruckquelle (5) verbunden ist und ein Niederdruckdrehanschluß (42) in der Schwenkachse (34) angeordnet ist.

## Claims

1. Process for manufacturing a hollow body by blow moulding a preform in a finishing mould by means of a blowing fluid, **characterized in that** it consists in associating with each mould (7; 32a; 32b; 32c; 32d) a separate compression chamber (3; 21), consisting of a cylinder (1; 20; 31a...31d)/piston (2; 19; 30a...30d) assembly; in creating an initial fluid pressure in the chamber when the latter is at its maximum volume; in reducing the volume of the chamber in order to compress the fluid, while keeping the chamber isolated from the inside of the preform; in bringing the chamber into communication (8; 22, 24, 25) with the preform when the piston reaches a predetermined position in order to initiate the blowing of the preform by expansion of the compressed fluid; and in continuing to reduce the volume of the chamber until a minimum volume, while keeping communication with the preform in order to complete the blow moulding by compressing the fluid volume remaining in the chamber and transferring it into the preform.

2. Process according to Claim 1, **characterized in that** the initial pressure is created in the chamber (3; 21) at least partly with the aid of an external low-pressure fluid source (5) connected to the chamber via a low-pressure circuit (4; 26).

3. Process according to Claim 2, **characterized in that** the low-pressure source delivers a chosen pressure of between 1 and 15 bar.

4. Process according to Claim 3, **characterized in that** the low-pressure source delivers a chosen pressure of 7 bar.

5. Process according to Claim 2, **characterized in that** it consists in providing means (6; 27) for isolating the chamber from the low-pressure fluid circuit so as to prevent the fluid contained in the chamber from being injected back into the low-pressure circuit.

6. Process according to Claim 1, **characterized in that** the initial pressure is created in the chamber (3; 21), at least partly, by returning, when venting it, the high-pressure fluid contained in the hollow body to the chamber.

7. Process according to Claims 2 and 6, **characterized in that** the low-pressure source (5) provides an inflow complementary to that of the venting in order to obtain the initial pressure when a hollow body has been blow-moulded in the mould during the previous cycle.

8. Process according to any one of Claims 1 to 7, **characterized in that** it consists in keeping constantly under pressure, for a predetermined time, the fluid contained in the hollow body after it has been blow-moulded.

9. Device for implementing the process according to one of Claims 1 to 8, **characterized in that** it comprises, associated with a mould (7; 32a; ...; 32d), a compression chamber (3; 21) consisting of a cylinder (1; 20; 31a; ...; 31d) in which a piston (2; 19; 30a; ...; 30d) has been placed; a fluid circuit (4; 26; 41, 43a, ..., 43d) bringing the chamber into communication with means (5) for creating an initial pressure in the chamber when the latter is at its maximum volume, while keeping the inside of the preform (9) isolated; means (8, 11, 12, 13; 22, 23, 24, 25) for bringing the compression chamber into communication with the inside of the preform (9) placed in the mould, when the piston reaches a predetermined position, and **in that** the length of the cylinder is such that, after the chamber has been brought into communication with the preform, the travel of the piston may continue in order to complete the blow moulding by transferring the fluid volume remaining in the chamber into the preform.

10. Device according to Claim 9, **characterized in that** the means for bringing the compression chamber (3) into communication with the preform (9) consist of a fluid link (8) running, on one side, into the bottom of the chamber and, on the other side, into the preform and **in that** a valve (11), the opening and closing of which are controlled by means (12) for detecting the position of the piston, the said means being associated with a control interface (13), is placed in the said link.

11. Device according to Claim 9, **characterized in that** the means for bringing the compression chamber (21) into communication with the preform (9) comprise: on the one hand, a line (22), a first end of which runs into the cylinder (20) through its wall, in a region facing the piston (19) at any moment during its travel, and a second end of which communicates with the blowing means (10) associated with the mould (7); and, on the other hand, an orifice (24) made in the piston, a first end of which runs into the compression chamber (21) and a second end of which runs into a counterbore (25) made in the periphery of the piston, **in that** the position of the counterbore is such that, when the piston arrives in the predetermined position for initiating the blow moulding, the counterbore (25) arrives opposite the first end of the line (22), and **in that** the dimensions of the counterbore are such that, when the piston continues its travel in order to complete the blow moulding, the counterbore (25) is still opposite the line (22).

12. Device according to Claim 11, **characterized in that** a non-return valve (23) is placed in the line (22) in order to prevent fluid returning from the hollow body to the chamber when the piston has completed its travel and starts its return movement back to its initial position, although the counterbore (25) is still opposite the orifice (22).

13. Device according to one of Claims 9 to 12, **characterized in that** the chamber (3; 21) is connected to a low-pressure fluid source (5) via a link (4; 26; 41; 42; 43a...43d) in which non-return means (6; 27) are provided in order to prevent fluid from being sent back towards the source (5) after the start of compression.

14. Device according to Claim 13, **characterized in that** the link (4; 26; 43a...43d) runs into the chamber through the wall of the cylinder (1; 20; 31a...31d) in a region lying between the two extreme positions of the piston so that the said link is blocked off by the piston during part of its travel.

15. Device according to one of Claims 9 to 13, **characterized in that** the chamber is brought into communication with the mould (7) via a link (17; 28) provided with non-return means (18; 29) for preventing, during compression, the fluid from being transferred directly into the mould until the sufficient pressure has been reached and to allow, after blow moulding, the pressurized fluid contained in the hollow body to return to the chamber.

16. Device according to Claim 15, **characterized in that** the link (17; 28) runs into the chamber through the wall of the cylinder, in a region lying between the two extreme positions of the piston, so that the said link is blocked off by the piston during part of its travel.

17. Device according to Claims 14 and 16, **characterized in that** the link (14; 26; 43a...43d) between the chamber and the low-pressure source (5) runs into a region of the wall of the cylinder which is further away from the bottom of the latter than the link (17; 28) between the chamber and the mould.

18. Device according to one of Claims 9 to 17, **characterized in that** it includes a safety valve (15), placed in the bottom of the chamber, in order to prevent overpressures.

19. Installation comprising at least one device according to one of Claims 9 to 18, **characterized in that** it furthermore comprises a frame (35), a structure (33) rotating about a pivot (34) carried by the frame and at least one mould (32a; ...32c) fixed to the said structure and associated with a respective device; and **in that** a first end of each cylinder/piston assembly (31a, 30a; ...; 31d, 30d) is connected to a first respective pin (39) carried by the frame parallel to the axis of the pivot and separated from the latter by a distance defining the desired travel of the piston; and **in that** a second end of each cylinder/piston assembly is connected to a second respective pin (40a; ...; 40d) parallel to the first and carried by the rotating structure (33) in the direction of a peripheral region of the latter.

20. Installation according to Claim 19, **characterized in that**, with a piston having a control rod (38a;...38d), the latter is connected to the said first pin (39) and the cylinder is connected to the said second pin (40a; ...; 40d).

21. Installation according to either of Claims 19 and 20, **characterized in that** it comprises at least two devices, **in that** the first pin (39) is common to each of the devices and the second pins (40a; ...; 40d) are placed on the rotating structure (33) at equal distances from the pivot (34).

22. Installation according to Claim 21, **characterized in that** the said second pins (40a; ...; 40d) are uniformly distributed anglewise on the rotating structure.

23. Installation according to one of Claims 19 to 22, **characterized in that** it is connected to an external low-pressure source (5) and a rotating low-pressure coupling (42) is placed on the axis of the pivot (34).
